# EUROPÄISCHE PATENTSCHRIFT

(11) **EP 1 612 392 B1**
(45) Veröffentlichungstag und Bekanntmachung des Hinweises auf die Patenterteilung: **10.05.2017**
(21) Anmeldenummer: 05011049.3
(22) Anmeldetag: 21.05.2005
(51) Int. Cl.: F02D 13/02, F02D 41/00, F02D 41/02

(54) **Verfahren zum Betreiben einer Brennkraftmaschine**
Method for operating a combustion engine
Procédé de fonctionnement de moteur à combustion

(30) Priorität: 30.06.2004 DE 102004031502
(43) Veröffentlichungstag der Anmeldung: 04.01.2006
(73) Patentinhaber: Daimler AG, 70327 Stuttgart (DE)
(72) Erfinder: Kemmner, Markus, 72669 Unterensingen (DE); Koch, Thomas, Dr., 71034 Böblingen (DE)
(74) Vertreter: JENSEN & SON

(56) Entgegenhaltungen:
- EP-A2- 1 136 682
- WO-A1-2005/052329
- DE-A1- 10 250 121
- DE-A1- 10 351 375
- JP-A- 2000 170 556
- US-A1- 2003 200 744

## Beschreibung

Die Erfindung betrifft ein Verfahren zum Betreiben einer Brennkraftmaschine, welche wenigstens einen Zylinder mit einem demselben zugeordneten Brennraum aufweist, nach der im Oberbegriff von Anspruch 1 näher definierten Art.

Ein gattungsgemäßes Verfahren ist beispielsweise aus der DE 102 50 121 A1 bekannt. Hierbei wird während des von dem Kolben ausgeführten Kompressionshubs das Auslassventil geöffnet, so dass aus dem Zylinder unverbrannter Kraftstoff und Luft freigesetzt wird. Der Kraftstoff oxidiert in der Abgasnachbehandlungsvorrichtung mit der Luft, was zur Freisetzung von Wärme führt, die in der Abgasnachbehandlungsvorrichtung eine gewünschte Temperaturerhöhung erzeugt. Diese Zudosierung von Kraftstoff in die Abgasleitung ist jedoch nicht ganz unproblematisch und bedarf einer sehr effektiven Steuerung, um keine nachteiligen Effekte zu erzeugen.

Aus der WO 03/104622 A1 ist ein Steuerverfahren zum Regenerieren eines Partikelfilters in einem Abgassystem bekannt, bei der die Steuerzeiten der Gaswechselventile während des Einlasshubs verändert werden sollen, um die Temperatur in der Abgasleitung auf eine Temperatur zu erhöhen, die zur Regeneration des Partikelfilters geeignet ist. Allerdings können mit der dort beschriebenen Lösung keine ausreichenden Effekte erzielt werden.

Die WO 01/29383 A1 beschreibt ein Verfahren zur Beeinflussung der Abgastemperatur in einer Brennkraftmaschine, bei welcher zur Erhöhung der Abgastemperatur das Brennraumauslassventil früher geöffnet wird. Hierzu werden übliche Nockenwellenverstelleinrichtungen eingesetzt, mit denen eine Verstellung der Nockenwelle typischerweise um ca. 10 bis 20° möglich ist. Das beschriebene Verfahren ist außerdem nur für Brennkraftmaschinen mit variablem Verdichtungsverhältnis geeignet, was jedoch einen sehr hohen Aufwand und somit äußerst hohe Kosten erzeugt.

Die JP 2002295215 A beschreibt eine Vorrichtung zum Erhöhen der Abgastemperatur einer Brennkraftmaschine, bei der die Steuerzeiten des Auslassventils um ca. 20 bis 40° Kurbelwellenwinkel in Richtung früh verstellt werden können. Dabei wird das Auslassventil im Verdichtungshub geöffnet.

In der EP 1 389 674 A1 ist eine Strategie beschrieben, nach welcher das Auslassventil während des Einlasshubs geöffnet wird, um nicht nur kalte Frischluft, sondern auch bereits verbranntes, heißes Gas nochmals anzusaugen.

Die EP 1 136 682 A1 beschreibt ein Regenerationsverfahren für Stickoxid-Speicherkatalysatoren wobei die erforderliche Anfettung des Abgases durch eine Veränderung der Ventilsteuerzeiten erreicht wird.

Sämtliche der genannten Verfahren und Vorrichtungen sind jedoch nicht in der Lage, eine beispielsweise zur Regeneration eines Partikelfilters ausreichende Temperatur des den Brennraum verlassenden Abgases zu erzeugen.

Es ist daher Aufgabe der vorliegenden Erfindung, ein Verfahren zum Betreiben einer Brennkraftmaschine zu schaffen, durch welches mit einfachen Mitteln eine zur Regeneration einer Abgasnachbehandlungseinrichtung ausreichende Erhöhung der in der Abgasleitung herrschenden Temperatur erzielbar ist.

Erfindungsgemäß wird diese Aufgabe durch die in Anspruch 1 genannten Merkmale gelöst.

Bei dem erfindungsgemäßen Verfahren wird wenigstens einer der Zylinder unbefeuert betrieben. Bei diesem Zylinder wird das Auslassventil im Bereich des oberen Kompressionstotpunkts des Kolbens geöffnet, wodurch die heiße, komprimierte Luft aus dem Brennraum in die Abgasleitung entweichen kann, dort die Temperatur anhebt und auf diese Weise die Abgasnachbehandlungseinrichtung erwärmt. Wenigstens ein weiterer Zylinder wird befeuert betrieben wobei dort das Auslassventil während des Kompressionshubs im Wesentlichen geschlossen bleibt. Dadurch ist eine Regeneration der Abgasnachbehandlungseinrichtung möglich.

Das erfindungsgemäße Verfahren kann vorteilhafterweise mit sehr einfachen, beispielsweise hydraulischen oder mechanischen Mitteln durchgeführt werden, da ein entsprechendes Öffnen des Auslassventils durch bekannte, an der Brennkraftmaschine gegebenenfalls bereits vorhandene Einrichtungen durchgeführt werden kann.

Als besonders vorteilhaft bezüglich der in die Abgasleitung eingebrachten Wärme hat es sich herausgestellt, wenn das Auslassventil frühestens 40° vor und spätestens 40° nach dem oberen Kompressionstotpunkt des Kolbens geöffnet wird.

Eine Synchronisation der Zündung des Kraftstoff-Luft-Gemischs mit dem Öffnen des Auslassventils kann sich ergeben, wenn das Kraftstoff-Luft-Gemisch in dem Zylinder frühestens 40° vor dem oberen Kompressionstotpunkt des Kolbens und spätestens 40° nach dem oberen Kompressionstotpunkt des Kolbens gezündet wird.

Durch ein derartiges Verfahren ist es möglich, gleichzeitig die Abgasnachbehandlungseinrichtung zu regenerieren und dennoch die Brennkraftmaschine so zu betreiben, dass dieselbe eine ausreichende nutzbare Leistung abgibt, beispielsweise um ein Kraftfahrzeug anzutreiben. Hierbei ergibt sich eine um so höhere Temperatur in der Abgasleitung, je mehr Zylinder unbefeuert und mit dem erfindungsgemäßen Öffnen des Auslassventils im Bereich des oberen Kompressionstotpunkts des Kolbens betrieben werden. Die befeuerten Zylinder müssen hierbei eine größere Leistung erbringen als bei einer Betriebsweise, bei der alle Zylinder befeuert werden, was vorteilhafterweise eine weitere Erhöhung der Abgastemperatur zur Folge hat.

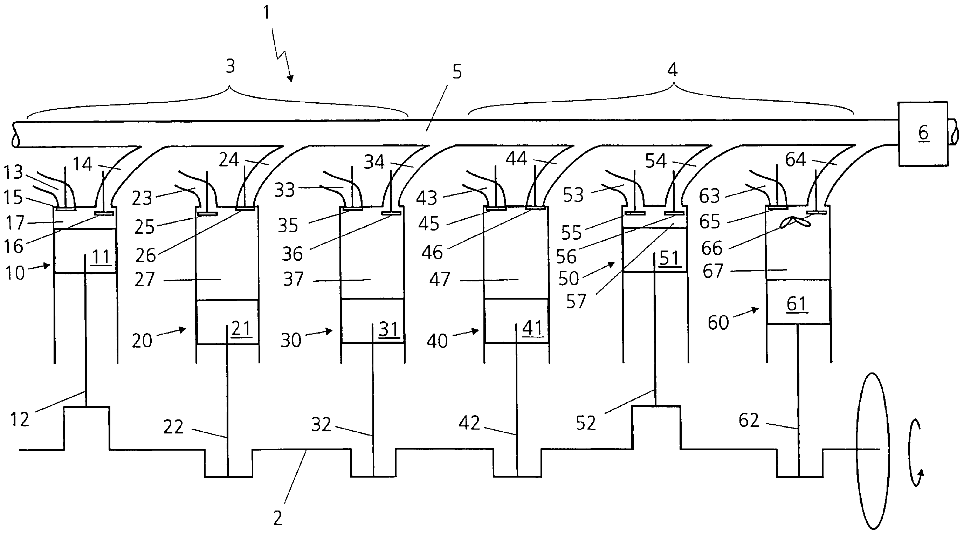

Weitere vorteilhafte Ausgestaltungen und Weiterbildungen der Erfindung ergeben sich aus den restlichen Unteransprüchen. Nachfolgend ist ein Ausführungsbeispiel der Erfindung anhand der Zeichnung prinzipmäßig dargestellt.

Die einzige Figur zeigt eine mehrzylindrige Brennkraftmaschine, deren Zylinder in unterschiedlichen Modi betrieben werden.

Eine in an sich bekannter Weise ausgebildete, nach dem Diesel- oder Otto-Prinzip arbeitende Brennkraftmaschine 1 weist in der dargestellten Ausführungsform insgesamt sechs Zylinder 10, 20, 30, 40, 50 und 60 auf, in denen jeweilige Kolben 11, 21, 31, 41, 51 und 61 Oszillationsbewegungen zwischen einem nicht näher bezeichneten unteren Totpunkt und einem oberen Totpunkt ausführen. Die Kolben 11 - 61 sind über jeweilige Pleuel 12, 22, 32, 42, 52 und 62 mit einer Kurbelwelle 2 der Brennkraftmaschine 1 verbunden.

In dem nicht dargestellten Zylinderkopf der Brennkraftmaschine 1 befinden sich jedem Zylinder 10 - 60 zugeordnete Einlasskanäle 13, 23, 33, 43, 53 und 63 sowie jeweilige Auslasskanäle 14, 24, 34, 44, 54 und 64. Des weiteren weist jeder Zylinder 10 - 60 jeweilige Einlassventile 15, 25, 35, 45, 55 und 65 sowie jeweilige Auslassventile 16, 26, 36, 46, 56 und 66 auf, die den Eintritt von Luft oder eines Kraftstoff-Luft-Gemisches über die Einlasskanäle 13 - 63 in jeweilige Brennräume 17, 27, 37, 47, 57 und 67 der Zylinder 10 - 60 bzw. den Austritt von Abgas aus den Brennräumen 17 - 67 über die Auslasskanäle 14 - 64 steuern. Die Steuerung der Einlassventile 15 - 65 und der Auslassventile 16 - 66 erfolgt über nicht dargestellte Nockenwellen. Selbstverständlich kann jeder Zylinder 10 - 60 mehr als ein Einlassventil 15 - 65 und/oder mehr als ein Auslassventil 16 - 66 aufweisen.

Im vorliegenden Fall weist die Brennkraftmaschine 1 insgesamt sechs Zylinder 10 - 60 auf, es könnte jedoch auch jede andere Anzahl an Zylindern vorgesehen sein. Des weiteren wäre es auch möglich, die Zylinder 10 - 60 in V- oder einer anderen geeigneten Bauweise anzuordnen und nicht, wie dargestellt, in Reihenbauweise.

Die Brennkraftmaschine 1 kann gemäß einem nachfolgend beschriebenen Verfahren betrieben werden, wozu die Zylinder 10 - 60 in zwei Zylindergruppen aufgeteilt sind, nämlich eine erste Zylindergruppe 3, bestehend aus den Zylindern 10, 20 und 30, sowie eine zweite Zylindergruppe 4, bestehend aus den Zylindern 40, 50 und 60. Hierbei werden die Zylinder 10 - 30 der ersten Zylindergruppe 3 nicht befeuert, d.h. in dieselben wird kein Kraftstoff-Luft-Gemisch eingeleitet und es findet keine Verbrennung statt. Statt dessen werden die Auslassventile 16, 26 und 36 im Bereich des oberen Kompressionstotpunkts der Kolben 11, 21 und 31 geöffnet, was für das Auslassventil 16 des Zylinders 10 beispielhaft dargestellt ist. Im allgemeinen ist es vorgesehen, die Auslassventile 16 - 36 frühestens 40° vor und spätestens 40° nach dem oberen Kompressionstotpunkt des Kolbens 11 - 31 zu öffnen, wobei das Schließen derselben so lange verzögert werden kann, bis sie üblicherweise zum Beenden des Ausschubtaktes geschlossen werden. Besonders wirkungsvoll ist eine möglichst lange Öffnungsphase der Auslassventile 16 - 36.

Durch diese Vorgehensweise wird die innerhalb der Brennräume 17, 27 und 37 komprimierte und dadurch erhitzte Luft in den jeweiligen Auslasskanal 14, 24 und 34 und somit in eine sich an sämtliche Auslasskanäle 14 - 64 anschließende Abgasleitung 5 der Brennkraftmaschine 1 geleitet. Dies führt zu einer erheblichen Erhöhung der Temperatur innerhalb der Abgasleitung 5, die ausreichend ist, um eine in der Abgasleitung 5 angeordnete Abgasnachbehandlungseinrichtung 6 zu regenerieren. Bei der Abgasnachbehandlungseinrichtung 6 kann es sich in Abhängigkeit der Bauart der Brennkraftmaschine 1 beispielsweise um einen Partikelfilter oder auch um einen NOₓ-Speicher-katalysator handeln. Das Verfahren kann von einer nicht dargestellten elektronischen Steuereinrichtung eingeleitet werden, die eine erforderliche Regeneration der Abgasnachbehandlungseinrichtung 6 erkennt.

Auch die Auslassventile 26 und 36 der Zylinder 20 und 30 werden in der beschriebenen Art und Weise im Bereich des oberen Kompressionstotpunkts des zugehörigen Kolbens 21 und 31 geöffnet, wobei sich die Zylinder 20 und 30 in der dargestellten Stellung jedoch in einem anderen Zustand befinden. So ist bei dem Zylinder 20 das Einlassventil 25 und bei dem Zylinder 30 das Auslassventil 36 geöffnet, allerdings befinden sich die Kolben 21 und 31 jeweils im Bereich ihres unteren Totpunkts.

Die Zylinder 40, 50 und 60 werden in üblicher Weise, d.h. befeuert, betrieben, wobei sich der Kolben 41 des Zylinders 40 in seinem unteren Totpunkt befindet und am Beginn seines Kompressionshubs steht. Das Einlassventil 45 und das Auslassventil 46 des Zylinders 40 sind geschlossen. Der Kolben 51 des Zylinders 50 befindet sich an seinem oberen Totpunkt, wobei sowohl das Einlassventil 55 als auch das Auslassventil 56 geöffnet sind. Der Zylinder 60 ist während des Expansionshubs des Kolbens 61 dargestellt, bei dem das Kraftstoff-Luft-Gemisch gezündet wird und sich das Auslassventil 66 durch die Ansteuerung der Nockenwelle zu einem üblichen Zeitpunkt und ausschließlich mit dem Ziel des Ladungswechsels öffnet.

Bei der Auswahl der Zylinder 10 - 60 für den befeuerten bzw. nicht befeuerten Betrieb sollte auf eine möglichst gleichmäßige Zündfolge geachtet werden, wobei die räumliche Anordnung derselben eine untergeordnete Rolle spielt.

Das unter Bezugnahme auf die Zeichnung beschriebene Verfahren, bei dem allgemein wenigstens einer der Zylinder 10 - 60 unbefeuert betrieben wird, wobei bei diesem wenigstens einen Zylinder 10 - 60 die Temperatur des Abgases dadurch erhöht wird, dass das zugehörige Auslassventil 16 - 66 im Bereich des oberen Kompressionstotpunkts des Kolbens 11 - 61 geöffnet wird, und wobei wenigstens einer der Zylinder 10 - 60 befeuert betrieben wird, wobei bei diesem Zylinder 10 - 60 das Auslassventil 16 - 66 während des Kompressionshubs geschlossen bleibt, stellt eine spezielle Ausführung eines Verfahrens dar, gemäß welchem ganz allgemein zur Regeneration der Abgasnachbehandlungseinrichtung 6 die Temperatur des Abgases dadurch erhöht wird, dass das den Brennraum 17 - 67 in Richtung der Abgasleitung 5 freigebende Auslassventil 16 - 66 im Bereich des oberen Kompressionstotpunkts des Kolbens 11 - 61 geöffnet wird. Dies bedeutet, dass auch sämtliche Zylinder 10 - 60 der Brennkraftmaschine 1 befeuert, d.h. mit der Einleitung eines Kraftstoff-Luft-Gemisches und einer Verbrennung desselben, betrieben und deren Auslassventile 16 - 66 zu dem genannten Zeitpunkt geöffnet werden können. Genauso bedeutet dies auch, dass es möglich ist, sämtliche Zylinder 10 - 60 unbefeuert zu betreiben und deren Auslassventile 16 - 66 zu dem genannten Zeitpunkt zu öffnen, beispielsweise in einem Bremsbetrieb. Ebenfalls umfasst sind sämtliche Kombinationen zwischen befeuertem und unbefeuertem Betrieb einer beliebigen Anzahl der einzelnen Zylinder 10 - 60. Je nach Lastzustand der Brennkraftmaschine 1 kann die Anzahl der befeuerten bzw. unbefeuerten Zylinder 10 - 60 variiert werden.

Wenn wenigstens eines der Auslassventile 16 - 66 von wenigstens einem befeuerten Zylinder 10 - 60 im Bereich des oberen Kompressionstotpunkts des zugehörigen Kolbens 11 - 61 geöffnet werden, so ist es sinnvoll, das Kraftstoff-Luft-Gemisch in dem Zylinder 10 - 66 frühestens 40° vor dem oberen Kompressionstotpunkt des Kolbens 11 - 61 und spätestens 40° nach dem oberen Kompressionstotpunkt des Kolbens 11 - 61 zu zünden. Prinzipiell kann das Auslassventil 16 - 66 vor oder nach dem Beginn der Zündung oder auch gleichzeitig mit dem Beginn der Zündung geöffnet werden. Es ist möglich, das Auslassventil 16 - 66 nach dem Ende der Verbrennung, vorzugsweise unmittelbar nach dem Ende der Verbrennung, zu öffnen. Eine umso stärkere Erwärmung des Abgases ergibt sich, je früher das Auslassventil 16 - 66 geöffnet wird, da auf diese Weise ein beträchtlicher Teil der Nutzarbeit in dem jeweiligen Zylinder 10 - 60 nicht umgesetzt wird.

Es ist besonders sinnvoll, das beschriebene Verfahren während des Leerlaufs oder in Zeitpunkten niedriger Last bzw. Teillast der Brennkraftmaschine 1 durchzuführen, da gerade in diesen Betriebsbereichen oft keine ausreichende Abgastemperatur bzw. Temperatur in der Abgasleitung 5 zur Regeneration der Abgasnachbehandlungseinrichtung 6 zur Verfügung steht. Grundsätzlich ist dies während des regulären Fahrbetriebs möglich, es kann jedoch auch ein Notregenerationsbetrieb ohne Abgabe einer Motorlast durchgeführt werden, falls der Zustand der Abgasnachbehandlungseinrichtung 6 dies erfordert. Bei zunehmender Last der Brennkraftmaschine 1 ist es aufgrund der steigenden Temperatur innerhalb der Abgasleitung 5 sinnvoll, eine geringere Anzahl an Zylindern 10 - 60 unbefeuert zu betreiben. Dabei kann es sinnvoll sein, bei sich ändernden Lastbedingungen der Brennkraftmaschine 1 die jeweilige Betriebsstrategie an den Lastzustand anzupassen. Zur Durchführung und gegebenenfalls Anpassung der Betriebsstrategie kann eine üblicherweise bereits vorhandene und gegebenenfalls zu applizierende Steuereinheit eingesetzt werden.

Das beschriebene Verfahren kann mit einer an sich bekannten Rückführung von Abgasen kombiniert werden, da eine Öffnung eines Abgasrückführventils zu einer weiteren Erhöhung der Temperatur innerhalb der Abgasleitung 5 führt. Auch Kombinationen mit weiteren, an sich bekannten Verfahren zur Temperaturerhöhung, wie zum Beispiel das Schließen einer Bremsklappe nach der Abgasturboladerturbine, die Umgehung eines Ladeluftkühlers, die Aufheizung der Ansaugluft oder eine späte Einspritzung, sind möglich.

Zusätzlich kann bei jedem Betriebsmodus vorgesehen sein, dass während der Phase der Regeneration der Abgasnachbehandlungseinrichtung 6 zusätzliche Maßnahmen zum Regenerieren der Abgasnachbehandlungseinrichtung 6, wie zum Beispiel Einspritzen von Kraftstoff, Harnstoff oder ähnliches, durchgeführt werden.

Eine weitere mögliche Betriebsweise kann darin bestehen, dass nach dem Öffnen des Auslassventils 16 - 66, wenn sich die Temperatur innerhalb der Zylinder 10 - 60 bereits verringert hat, beispielsweise auf eine Temperatur von ca. 400 - 500°C, in die nicht befeuerten, geschleppten Zylinder 10 - 60 Kraftstoff eingespritzt wird. In diesem Temperaturbereich kann eine Entflammung des Kraftstoffs weitestgehend vermieden werden, gleichzeitig wird jedoch eine sehr gute Verdampfung und Aufbereitung des Kraftstoffs erzielt. Dieser Kraftstoff kann in einem der Abgasnachbehandlungseinrichtung 6 vorgeschalteten, nicht dargestellten Oxydationskatalysator die Temperatur derart erhöhen, dass die Abgastemperatur ausreicht, um die Abgasnachbehandlungseinrichtung 6 zu regenerieren, wodurch auf das Zuführen von Kraftstoff in einer externen HC-Dosiereinheit verzichtet werden kann. Ein zusätzlicher Vorteil dieser Lösung besteht darin, dass der Kraftstoff zu einem Zeitpunkt in die Zylinder 10 - 60 eingespritzt wird, an dem der Kolben 11 - 61 sich noch relativ nah am oberen Totpunkt befindet, wodurch die Benetzung der Zylinderwand und die sich hieraus ergebenden Probleme bezüglich Ölverdünnung usw. weitestgehend vermieden werden können. Hierbei spielt es keine Rolle, ob zum Zeitpunkt der Einspritzung das Auslassventil 16 - 66 geöffnet oder bereits wieder geschlossen ist.

## Patentansprüche

1. Verfahren zum Betreiben einer Brennkraftmaschine (1), welche mehrere Zylinder (10, 20, 30, 40, 50, 60) mit einem jeweils zugeordneten Brennraum (17, 27, 37, 47, 57, 67) aufweist, wobei in den Zylindern ein jeweiliger Kolben (11, 21, 31, 41, 51, 61) eine oszillierende Bewegung zwischen einem unteren Totpunkt und einem oberen Totpunkt ausführt, wobei in dem Brennraum (17, 27, 37, 47, 57, 67) ein Kraftstoff-Luft-Gemisch gezündet wird, wobei bei der Verbrennung des Kraftstoff-Luft-Gemisches in dem Brennraum (17, 27, 37, 47, 57, 67) entstehendes Abgas einer Abgasleitung (5) zugeführt wird, und wobei das Abgas in einer in der Abgasleitung (5) angeordneten Abgasnachbehandlungseinrichtung (6) gereinigt wird,
**dadurch gekennzeichnet,**
**dass** zur Regeneration der Abgasnachbehandlungseinrichtung (6) die Temperatur in der Abgasleitung (5) dadurch erhöht wird, dass
- wenigstens einer der Zylinder (10, 20, 30, 40, 50, 60) unbefeuert betrieben wird, wobei bei diesem wenigstens einen Zylinder (10, 20, 30) die Temperatur in der Abgasleitung (5) dadurch erhöht wird, dass wenigstens ein den Brennraum (17, 27, 37) des wenigstens einen Zylinders (10, 20, 30) in Richtung der Abgasleitung (5) freigebendes Auslassventil (16, 26, 36) des wenigstens einen Zylinders (10, 20, 30) im Bereich des oberen Kompressionstotpunkts des jeweiligen Kolbens (11, 21, 31) geöffnet wird, und wobei
- wenigstens einer der Zylinder (10, 20, 30, 40, 50, 60) befeuert betrieben wird, wobei bei diesem Zylinder (40, 50, 60) ein den Brennraum (47, 57, 67) des wenigstens einen Zylinders in Richtung der Abgasleitung (5) freigebendes Auslassventil (46, 56, 66) des wenigstens einen Zylinders (40, 50, 60) während des Kompressionshubs im Wesentlichen in seiner geschlossenen Stellung gehalten wird.

2. Verfahren nach Anspruch 1,
**dadurch gekennzeichnet,**
**dass** das Auslassventil (16 ,26 ,36) des wenigstens einen unbefeuerten Zylinders (10, 20, 30) frühestens 40° vor und spätestens 40° nach dem oberen Kompressionstotpunkt des Kolbens (11, 21, 31) geöffnet wird.

3. Verfahren nach Anspruch 1 oder 2,
**dadurch gekennzeichnet,**
**dass** das Kraftstoff-Luft-Gemisch in dem wenigstens einen befeuerten Zylinder (40, 50, 60) frühestens 40° vor dem oberen Kompressionstotpunkt des Kolbens (41, 51, 61) und spätestens 40° nach dem oberen Kompressionstotpunkt des Kolbens (41, 51, 61) gezündet wird.

4. Verfahren nach Anspruch 1, 2 oder 3,
dass das Auslassventil (46, 56, 66) des wenigstens einen befeuerten Zylinders (40, 50, 60) vor dem Beginn der Zündung des Kraftstoff-Luft-Gemisches geöffnet wird.

5. Verfahren nach Anspruch 1, 2 oder 3,
dass das Auslassventil (46, 56, 66) des wenigstens einen befeuerten Zylinders (40, 50, 60) nach dem Beginn der Zündung des Kraftstoff-Luft-Gemisches geöffnet wird.

6. Verfahren nach Anspruch 1, 2 oder 3,
dass das Auslassventil (46, 56, 66) des wenigstens einen befeuerten Zylinders (40, 50, 60) nach dem Ende der Verbrennung des Kraftstoff-Luft-Gemisches geöffnet wird.

7. Verfahren nach Anspruch 1, 2 oder 3,
dass das Auslassventil (46, 56, 66) des wenigstens einen befeuerten Zylinders (40, 50, 60) gleichzeitig mit dem Beginn der Zündung des Kraftstoff-Luft-Gemisches geöffnet wird.

8. Verfahren nach einem der Ansprüche 1 bis 7,
**dadurch gekennzeichnet,**
**dass** während der Phase der Regeneration der Abgasnachbehandlungseinrichtung (6) zusätzliche Maßnahmen zum Regenerieren der Abgasnachbehandlungseinrichtung (6) durchgeführt werden, welche das Schließen einer Bremsklappe nach einer Abgasturboladerturbine umfassen.

9. Verfahren nach Anspruch 9,
**dadurch gekennzeichnet,**
**dass** nach dem Öffnen des Auslassventils (16, 26, 36) in die nicht befeuerten, geschleppten Zylinder (10, 20, 30) Kraftstoff eingespritzt wird.

10. Verfahren nach einem der Ansprüche 1 bis 8,
**dadurch gekennzeichnet,**
**dass** es während des Leerlaufs oder in Zeitpunkten niedriger Last der Brennkraftmaschine (1) durchgeführt wird.

## Claims

1. Method for operating an internal combustion engine (1) having a plurality of cylinders (10, 20, 30, 40, 50, 60), to each of which is assigned a combustion chamber (17, 27, 37, 47, 57, 67), wherein a respective piston (11, 21, 31, 41, 51, 61) performs an oscillating movement between a bottom dead centre and a top dead centre in the cylinders, wherein a fuel/air mixture is ignited in the combustion chamber (17, 27, 37, 47, 57, 67), wherein exhaust gas generated in the combustion of the fuel/air mixture in the combustion chamber (17, 27, 37, 47, 57, 67) is fed to an exhaust gas line (5), and wherein the exhaust gas is purified in an exhaust treatment device (6) located in the exhaust gas line (5), **characterised in that**
for the regeneration of the exhaust treatment device (6), the temperature in the exhaust gas line (5) is increased by
- operating at least one of the cylinders (10, 20, 30, 40, 50, 60) without fuel, wherein in this at least one cylinder (10, 20, 30) the temperature in the exhaust gas line (5) is increased by opening at least one exhaust valve (16, 26, 36) of the at least one cylinder (10, 20, 30), which opens the combustion chamber (17, 27, 37) of the at least one cylinder (10, 20, 30) in the direction of the exhaust gas line (5), in the range of the compression top dead centre of the respective piston (11, 21, 31), and by
- operating at least one of the cylinders (10, 20, 30, 40, 50, 60) with fuel, wherein in this cylinder (40, 50, 60) an exhaust valve (46, 56, 66) of the at least one cylinder (40, 50, 60), which opens the combustion chamber (47, 57, 67) of the at least one cylinder in the direction of the exhaust gas line (5), is substantially held in its closed position during the compression stroke.

2. Method according to claim 1,
**characterised in that**
the exhaust valve (16, 26, 36) of the at least one non-fuelled cylinder (10, 20, 30) is opened no sooner than 40° before and no later than 40° after the compression top dead centre of the piston (11, 21, 31).

3. Method according to claim 1 or 2,
**characterised in that**
the fuel/air mixture in the at least one fuelled cylinder (40, 50, 60) is ignited no sooner than 40° before the compression top dead centre of the piston (41, 51, 61) and no later than 40° after the compression top dead centre of the piston (41, 51, 61).

4. Method according to claim 1, 2 or 3,
**characterised in that**
the exhaust valve (46, 56, 66) of the at least one fuelled cylinder (40, 50, 60) is opened before the start of the ignition of the fuel/air mixture.

5. Method according to claim 1, 2 or 3,
**characterised in that**
the exhaust valve (46, 56, 66) of the at least one fuelled cylinder (40, 50, 60) is opened after the start of the ignition of the fuel/air mixture.

6. Method according to claim 1, 2 or 3,
**characterised in that**
the exhaust valve (46, 56, 66) of the at least one fuelled cylinder (40, 50, 60) is opened after the end of the combustion of the fuel/air mixture.

7. Method according to claim 1, 2 or 3,
**characterised in that**
the exhaust valve (46, 56, 66) of the at least one fuelled cylinder (40, 50, 60) is opened at the start of the ignition of the fuel/air mixture.

8. Method according to any of claims 1 to 7,
**characterised in that**
during the regeneration phase of the exhaust treatment device (6), additional measures are taken for regenerating the exhaust treatment device (6), including the closing of a brake flap downstream of a turbocharger turbine.

9. Method according to claim 8,
**characterised in that**
fuel is injected into the non-fuelled, dragged cylinders (10, 20, 30) after the opening of the exhaust valve (16, 26, 36).

10. Method according to any of claims 1 to 8,
**characterised in that**
it is carried out during idling or at times of a low loading of the internal combustion engine (1).

## Revendications

1. Procédé de fonctionnement d'un moteur à combustion interne (1), qui présente plusieurs cylindres (10, 20, 30, 40, 50, 60), chacun comprenant respectivement une chambre de combustion associée (17, 27, 37, 47, 57, 67), dans les cylindres un piston respectif (11, 21, 31, 41, 51, 61) effectuant un mouvement oscillant entre un point mort bas et un point mort haut, dans la chambre de combustion (17, 27, 37, 47, 57, 67) étant allumé un mélange air/carburant, lors de la combustion du mélange air/carburant dans la chambre de combustion (17, 27, 37, 47, 57, 67) le gaz d'échappement produit étant acheminé dans un tuyau gaz d'échappement (5), et le gaz d'échappement étant nettoyé dans le dispositif de post-traitement de gaz d'échappement (6) disposé dans le tuyau d'échappement (5), **caractérisé en ce que** pour la régénération du dispositif de post-traitement de gaz d'échappement (6) la température dans la conduite de gaz d'échappement est augmentée par le fait qu'
- au moins un des cylindres (10, 20, 30, 40, 50, 60) n'est pas alimenté, pour ledit au moins un cylindre (10, 20, 30) la température étant augmentée dans le tuyau d'échappement (16, 26, 36) par le fait qu'au moins une soupape d'échappement (5) de l'au moins un cylindre (10, 20, 30) libérant la chambre de combustion (17, 27, 37) de l'au moins un cylindre (10, 20, 30) en direction du tuyau d'échappement (5) dans la zone du point mort de compression haut de chaque piston (11, 21, 31) est ouverte, et
- au moins un des cylindres (10, 20, 30, 40, 50, 60) est alimenté, pour ledit cylindre (40, 50, 60), une soupape d'échappement (46, 56, 66) de l'au moins un cylindre (40, 50, 60) libérant la chambre de combustion (47, 57, 67) de l'au moins un cylindre dans la direction du tuyau d'échappement (5) est maintenue pendant la course de compression dans sa position sensiblement fermée.

2. Procédé selon la revendication 1, **caractérisé en ce que** la soupape d'échappement (16, 26, 36) de l'au moins un cylindre non alimenté (10, 20, 30) est ouverte au plus tôt à 40° avant et au plus tard à 40° après le point mort de compression haut du piston (11, 21, 31).

3. Procédé selon la revendication 1 ou la revendication 2, **caractérisé en ce que** le mélange air/carburant est allumé dans l'au moins un cylindre alimenté (40, 50, 60) au plus tôt à 40° avant le point mort de compression haut du piston (41, 51, 61) et au plus tard à 40° après le point mort de compression haut du piston (41, 51, 61).

4. Procédé selon la revendication 1, 2 ou 3, selon lequel la soupape d'échappement (46, 56, 66) de l'au moins un cylindre alimenté (40, 50, 60) est ouverte avant le début de l'allumage du mélange air/carburant.

5. Procédé selon la revendication 1, 2 ou 3, selon lequel la soupape d'échappement (46, 56, 66) de l'au moins un cylindre alimenté (40, 50, 60) est ouverte après le début de l'allumage du mélange air/carburant.

6. Procédé selon la revendication 1, 2 ou 3, selon lequel la soupape d'échappement (46, 56, 66) de l'au moins un cylindre alimenté (40, 50, 60) est ouverte après la fin de la combustion du mélange air/carburant.

7. Procédé selon la revendication 1, 2 ou 3, selon lequel la soupape d'échappement (46, 56, 66) de l'au moins un cylindre alimenté (40, 50, 60) est ouverte au début de l'allumage du mélange air/carburant.

8. Procédé selon l'une quelconque des revendications 1 à 7, **caractérisé en ce que** pendant la phase de la régénération du dispositif de post-traitement de gaz d'échappement (6) des mesures supplémentaires de régénération du dispositif de post-traitement de gaz d'échappement (6), qui consistent à fermer un clapet de frein après un surcompresseur de gaz d'échappement, sont mises en oeuvre.

9. Procédé selon la revendication 9, **caractérisé en ce qu'**après l'ouverture de la soupape d'échappement (16, 26, 36) du carburant est injecté dans le cylindre (10, 20, 30) non alimenté.

10. Procédé selon l'une quelconque des revendications 1 à 8, **caractérisé en ce qu'**il est exécuté pendant le ralenti ou à des moments de faible charge du moteur à combustion interne (1).
